# EUROPEAN PATENT APPLICATION

(11) **EP 4 672 405 A1**
(43) Date of publication of application: **31.12.2025**
(21) Application number: 24883726.2
(22) Date of filing: 30.01.2024
(51) Int. Cl.: H01M 10/0525, H01M 10/0567, H01M 4/131, H01M 10/058

(54) **SECONDARY BATTERY AND PREPARATION METHOD THEREFOR, AND ELECTRIC DEVICE**

(30) Priority: 30.10.2023 CN 202311415282
(71) Applicant: Contemporary Amperex Technology Co., Limited, Ningde, Fujian 352100 (CN)
(72) Inventor: WU, Kai, Ningde, Fujian 352100 (CN); WU, Zirui, Ningde, Fujian 352100 (CN); JIN, Chao, Ningde, Fujian 352100 (CN); YE, Yonghuang, Ningde, Fujian 352100 (CN); YAN, Guanfusheng, Ningde, Fujian 352100 (CN); DAI, Zhipeng, Ningde, Fujian 352100 (CN)
(74) Representative: Jacob, Reuben Ellis
(86) International application number: PCT/CN2024/074709
(87) International publication number: WO 2025/091709

(57) **Abstract**

The present application relates to a secondary battery and a preparation method therefor, and an electric device. The secondary battery comprises a positive electrode sheet, a negative electrode sheet, and an electrolyte. The positive electrode sheet comprises a positive electrode film layer; the positive electrode film layer comprises a positive electrode active material and a positive electrode electrolyte interface film; and the positive electrode electrolyte interface film comprises Li₂MO₄, wherein M comprises chalcogens. The electrolyte comprises a solvent and a lithium salt, and further comprises at least one of a lithium metal chelate and an additive capable of being combined with lithium ions to form a chelate. The secondary battery of the present application has low DCR, and has good rate performance and cycle performance.

## Description

### CROSS REFERENCE

The present application makes reference to Chinese Patent Application No. 202311415282.7 filed on October 30, 2023 and entitled "SECONDARY BATTERY AND PREPARATION METHOD THEREFOR, AND ELECTRIC DEVICE", which is incorporated herein by reference in its entirety.

### TECHNICAL FIELD

The present application relates to the technical field of secondary batteries, and in particular, to a secondary battery and a preparation method therefor, and an electric device.

### BACKGROUND

The statement here merely provides the background information related to the present application and does not necessarily constitute the prior art.

In recent years, as the application range of secondary batteries becomes wider, the secondary batteries are widely used in various fields such as energy storage power systems of hydraulic power stations, thermal power stations, wind power stations, and solar power stations, as well as electric tools, electric bicycles, electric motorcycles, and electric vehicles.

With the significant advancements in secondary batteries, higher demands have been placed on their cycle performance and kinetic performance of the secondary battery. Therefore, developing secondary batteries with superior cycle and kinetic performance has become a key focus for researchers in the field.

### SUMMARY

The present application is made in view of the above challenges, and one of its objectives is to provide a secondary battery with improved cycle performance and kinetic performance.

To achieve the above objective, a first aspect of the present application provides a secondary battery, including: a positive electrode sheet, a negative electrode sheet, and an electrolyte.
the positive electrode sheet includes a positive electrode film layer, the positive electrode film layer includes a positive electrode active material and a positive electrode electrolyte interface film (CEI); and the positive electrode electrolyte interface film includes Li₂MO₄, where M includes chalcogens; and
the electrolyte includes a solvent and a lithium salt, and further includes at least one of a lithium metal chelate and an additive capable of being combined with lithium ions to form a chelate.

The positive electrode film layer of the secondary battery of the present application has a positive electrode electrolyte interface film which includes Li₂MO₄, where M includes chalcogens, and the Li₂MO₄ is obtained by reacting the elemental chalcogens with residual lithium compounds RLCs on the surface of the positive electrode active material; as such, the residual lithium compounds on the surface of the positive electrode active material are removed, and the electrochemically stable positive electrode electrolyte interface film containing Li₂MO₄ can improve the initial Coulombic efficiency and storage performance of the secondary battery, particularly for those employing high-nickel ternary positive electrode materials, while reducing the battery's direct current resistance (DCR) and enhancing its rate performance and cycle performance. The electrolyte of the secondary battery includes at least one of a lithium metal chelate and an additive capable of being combined with lithium ions to forming chelates. This additive can chelate lithium ions to inhibit dissolved chalcogens in the electrolyte from being combined with lithium ions at the negative electrode sheet to form non-conductive lithium chalcogenides, thereby further reducing the battery's DCR and further improving the rate performance and the cycle performance of the battery. The secondary battery of the present application has a high initial Coulombic efficiency, good cycle performance, kinetic performance and storage performance.

In any embodiment, the additive includes one or more of an organophosphonic acid, a phosphonate, and an oxalate. The above additive is used in the electrolyte, which can effectively chelate with the lithium ions in the electrolyte, effectively alleviate the reaction of chalcogen dissolved in the electrolyte with lithium ions at the negative electrode to form non-conductive chalcogen lithium compound, and effectively improve the cycle performance and kinetic performance of the secondary battery.

In any embodiment, the organophosphonic acid includes one or more of hydroxyethylidene diphosphonic acid, aminotri(methylene phosphonic acid), ethylenediamine tetra(methylene phosphonic acid), and ethylenediamine tetramethylene phosphonic acid. The above-mentioned organophosphonic acid additive features two symmetrically structured phosphorus-oxygen double bonds (P=O) in its molecule, enabling more effective combination with lithium ions in the electrolyte to form a chelate.

In any embodiment, the phosphonate includes one or more of diethyl hydroxyethylidene diphosphonate, dimethyl hydroxyethylidene diphosphonate, and dipropyl hydroxyethylidene diphosphonate. The above-mentioned phosphonate additive also features two symmetrically structured phosphorus-oxygen double bonds (P=O) in its molecule, also enabling more effective combination with lithium ions in the electrolyte to form a chelate.

In any embodiment, the oxalate includes one or more of dimethyl oxalate, diethyl oxalate, dipropyl oxalate, and dibutyl oxalate. The above-mentioned oxalate additive features two symmetrically structured carbon-oxygen double bonds (C=O) in its molecule, enabling more effective combination with lithium ions in the electrolyte to form a chelate.

In any embodiment, the lithium metal chelate compound includes one or more of a chelate compound formed from the lithium ion and the organophosphonic acid, a chelate compound formed from the lithium ion and the phosphonate, and a chelate compound formed from the lithium ion and the oxalate.

In any embodiment, the chalcogen includes one or more of sulfur, selenium and tellurium. Further, the chalcogen is sulfur.

In any embodiment, a mass of Li₂MO₄ in the positive electrode electrolyte interface film is 0.1% to 4.5% of a mass of the positive electrode active material.

In any embodiment, a thickness of the positive electrode electrolyte interface film on the surface of the positive electrode active material is from 5 nm to 20 nm. Optionally, the thickness of the positive electrode electrolyte interface film is from 5 nm to 10 nm.

In any embodiment, the positive electrode active material includes LiₓNiₐCo_{b}A_{c}O₂, where A includes at least one of Mn and Al, 0.2≤x≤1.2, 0.6≤a<1, 0<b≤0.2, and a+b+c =1. As such, the positive electrode active material is used as a high-nickel ternary positive electrode material, which can improve an energy density of the secondary battery.

In any embodiment, the lithium salt includes one or more of lithium hexafluorophosphate, lithium bis(trifluoromethanesulfonyl)imide, lithium bis(fluorosulfonyl)imide, lithium bis(oxalato)borate, lithium difluoro(oxalato)borate, lithium tetrafluoroborate, lithium perchlorate, lithium hexafluoroarsenate, and lithium trifluoromethanesulfonate.

In any embodiment, a concentration of the lithium salt in the electrolyte is from 0.5 mol/L to 1.5 mol/L.

In any embodiment, a concentration of the lithium salt in the electrolyte is from 0.8 mol/L to 1.2 mol/L.

In any embodiment, the solvent includes one or more of dimethyl carbonate, diethyl carbonate, dipropyl carbonate, methyl ethyl carbonate, methyl propyl carbonate, ethyl propyl carbonate, ethylene carbonate, propylene carbonate, butylene carbonate, gamma-butyrolactone, methyl formate, ethyl acetate, propyl acetate, methyl propionate, ethyl propionate, and tetrahydrofuran.

A second aspect of the present application provides a preparation method of the secondary battery of the first aspect of the present application, the preparation method including the steps of:
mixing a solvent, a positive electrode active material, and an elemental chalcogen to form a slurry, coating the slurry onto a positive electrode current collector, and drying to obtain a positive electrode sheet; and
assembling the negative electrode sheet and the positive electrode sheet into a dry cell, and injecting the electrolyte into the dry cell to obtain a secondary battery;
where composition raw materials of the electrolyte include a solvent, a lithium salt and an additive capable of being combined with lithium ions to form a chelate.

The preparation method of the present application achieves the removal of residual lithium compounds such as Li₂O and Li₂CO₃ on the surface of the positive electrode active material by adding an elemental chalcogen to the positive electrode slurry, while forming an electrochemically stable artificial Li₂MO₄ CEI layer, which can improve the initial Coulombic efficiency and storage performance of the secondary battery, reduce the battery DCR, and enhance the rate performance and cycle performance of the battery; by adding an additive capable of being combined with lithium ions to forming chelates to the electrolyte, the method can mitigate the degradation of kinetic performance and cycle performance of the battery caused by the combination of dissolved chalcogen ions and lithium ions in the electrolyte. Therefore, the prepared secondary battery has a high initial Coulombic efficiency, good cycle performance, kinetic performance and storage performance.

In any embodiment, a mass of the elemental chalcogen in the slurry is 0.01% to 5% of a mass of the positive electrode active material. As such, the residual lithium compounds on the surface of the positive electrode active material can be removed well, and the battery performance will not be affected too much due to the addition of too many elemental chalcogens.

In any embodiment, a mass of the elemental chalcogen in the slurry is 0.35% to 1% of a mass of the positive electrode active material. As such, the adverse effect of the elemental chalcogen on the performance of the battery can be further reduced while the residual lithium compounds on the surface of the positive electrode active material are well removed.

In any embodiment, based on a total mass of the electrolyte, a mass fraction of the additive is from 0.01% to 3%. As such, the kinetic performance and the cycle performance of the secondary battery can be better improved.

In any embodiment, based on a total mass of the electrolyte, a mass fraction of the additive is from 0.05% to 0.1%. As such, the kinetic performance and the cycle performance of the secondary battery can be further improved.

In any embodiment, the positive electrode active material includes a high-nickel ternary positive electrode material, and the high-nickel ternary positive electrode material includes LiₓNiₐCo_{b}A_{c}O₂, where A is Mn or Al, 0.2≤x≤1.2, 0.6≤a<1, 0<b≤0.2, and a+b+c =1.

In any embodiment, the surface of the positive electrode active material has residual lithium compounds, and a mass of the residual lithium compounds is 0.1% to 2.0% of a mass of the positive electrode active material.

Provided in a third aspect of the present application is an electric device including one or more of the secondary batteries of the first aspect of the present application and the secondary battery prepared by the preparation method of the second aspect of the present application.

Details of one or a plurality of embodiments of the present application are set forth in the accompanying drawings and the description below. Other features, objectives, and advantages of the present application will be apparent from the specification, and the accompanying drawings, and the claims.

### DESCRIPTION OF DRAWINGS

To better describe and illustrate embodiments and/or examples provided in the present application, reference may be made to one or a plurality of accompanying drawings. Additional details or examples used to describe the accompanying drawings should not be considered as limiting the scope of any of the disclosed application, the currently described embodiments or examples, and best modes of these applications as currently understood. Moreover, the same reference numerals are used to denote the same components throughout the accompanying drawings. In the accompanying drawings:
FIG. 1 is a schematic diagram of a battery cell according to an implementation of the present application;
FIG. 2 is an exploded view of the battery cell shown in FIG. 1 according to an implementation of the present application; and
FIG. 3 is a schematic diagram of an electric device using a secondary battery as a power supply according to an embodiment of the present application.

Description of reference signs:
5-battery cell; 51-housing; 52-electrode assembly; 53-cover plate; and 6-electric device.

### DESCRIPTION OF EMBODIMENTS

Embodiments where a secondary battery and a preparation method therefor, and an electric device provided by the present application are described in detail appropriately with reference to the drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

The "range" disclosed in the present application is limited in the form of a lower limit and an upper limit. A given range is limited by selecting a lower limit and an upper limit, which define the boundaries of the specific range. A range defined in this manner may include an end value or may not include an end value, any end value may be independently included or not included, and may be any combination, that is, any lower limit may be combined with any upper limit to form a range. For example, if ranges of 60 to 120 and 80 to 110 are listed for specific parameters, it is understood that the ranges of 60 to 110 and 80 to 120 are also expected. In addition, if the smallest values 1 and 2 of a range are listed, and if the largest values 3, 4 and 5 of the range are listed, the following ranges are all expected: 1 to 3, 1 to 4, 1 to 5, 2 to 3, 2 to 4, and 2 to 5. In the present application, unless otherwise stated, a numerical range "a to b" represents a shorthand representation for a combination of any real numbers between a and b, where both a and b are real numbers. For example, a numerical range of "0 to 5" represents that all real numbers in the range of "0 to 5" have been listed herein, and "0 to 5" is merely a shorthand representation of combinations of these numerical values. In addition, when a parameter is expressed as an integer≥2, it is equivalent to listing that the parameter is an integer such as 2, 3, 4, 5, 6, 7, 8, 9, 10, 11, or 12. For example, when a parameter is expressed as an integer sleeted from "2 to 10", it is equivalent to listing integers 2, 3, 4, 5, 6, 7, 8, 9, and 10.

Unless otherwise defined, "multiple", "a plurality of" and the like related in the present application mean a number of two or more. For example, "one or more" means one or greater or equal to two.

Unless otherwise specified, all embodiments and optional embodiments of this application may be combined with each other to form new technical solutions.

The "embodiment" mentioned herein means that a particular feature, structure, or characteristic described with reference to the embodiment may be included in at least one embodiment or implementation of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments. The "implementation" mentioned herein has a similar understanding.

Those skilled in the art may understand that, in the method of each implementation or embodiment, a writing order of each step does not mean a strict execution order to constitute any limitation on an implementation process, and a detailed execution order of each step should be determined by its function and possible internal logic. Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

In the present application, in open technical features or technical solutions described by the words such as "contain", "include", and "comprise", unless otherwise specified, additional members other than the listed members are not excluded, and it may be considered that both closed features or solutions composed of the listed members and open features or solutions further including additional members in addition to the listed members are provided. For example, A includes a1, a2, and a3, and may further include another member or may not include an additional member unless otherwise specified, and it may be considered that both a feature or solution in which "A consists of a1, a2, and a3" and a feature or solution in which "A includes not only a1, a2, and a3 but also another member" are provided. In the present application, unless otherwise specified, A (e.g., B) means that B is a non-limiting example of A, and it may be understood that A is not limited to B.

In the present application, "optionally", "optional", and "option" means that there is or not, that is, means any one of two parallel solutions: "with" or "without". If "option" occurs repeatedly in a technical solution, each "option" is independent, unless otherwise specified without inconsistency or mutual restriction.

At present, with the significant advancements in secondary batteries, higher demands have been placed on their cycle performance and kinetic performance of the secondary battery. Therefore, developing secondary batteries with cycle and kinetic performance has become a key focus for researchers in the field. In this regard, the present application provides a secondary battery, which has better cycle performance and kinetic performance by adjusting the composition of the positive electrode film layer and the composition of the electrolyte.

In some embodiments, a first aspect of the present application provides a secondary battery including a positive electrode sheet, a negative electrode sheet, and an electrolyte. The positive electrode sheet includes a positive electrode film layer; the positive electrode film layer includes a positive electrode active material and a positive electrode electrolyte interface film; and the positive electrode electrolyte interface film includes Li₂MO₄, where M includes chalcogens. The electrolyte includes a solvent and a lithium salt, and further includes at least one of a lithium metal chelate and an additive capable of being combined with lithium ions to form a chelate.

In the positive electrode sheet of the conventional secondary battery, the positive electrode active material, especially the high-nickel ternary positive electrode material, is widely used due to its advantages such as high reversible capacity and low cost. However, residual lithium compounds (RLCs), such as Li₂O and Li₂CO₃, may exist on the surface of these positive electrode active materials, and the residual on the surface of the positive electrode active material may cause side effects during the use of the secondary battery, resulting in a low initial Coulombic efficiency and poor storage performance of the battery.

The positive electrode film layer of the secondary battery in the present application includes a positive electrode electrolyte interface film containing Li₂MO₄ formed from an elemental chalcogen and residual lithium compounds, where M includes chalcogens; as such, the residual lithium compounds on the surface of the positive electrode active material are removed, and the electrochemically stable positive electrode electrolyte interface film containing Li₂MO₄ can improve the initial Coulombic efficiency and storage performance of the secondary battery, particularly for those employing high-nickel ternary positive electrode materials, while reducing the battery's DCR and enhancing its rate performance and cycle performance. Moreover, the present application introduces an additive capable of being combined with lithium ions to forming chelates into the electrolyte. This additive can form a chelation phase with lithium ions in the electrolyte, making it more difficult for the elemental chalcogens partially dissolved in the electrolyte to combine with lithium ions, thereby inhibiting the migration of free chalcogens in the electrolyte toward the negative electrode of the battery and their formation of non-conductive chalcogen lithium compounds with lithium ions. Consequently, the efficiency of removing the residual lithium compounds from the surface of the positive electrode active material is improved, and the degradation of the kinetic performance and the cycle performance of the battery caused by the combination of dissolved chalcogen and lithium ions in the electrolyte can be mitigated. Therefore, the secondary battery has a high initial Coulombic efficiency, good cycle performance, kinetic performance and storage performance.

It can be understood that the above additives can be added to the electrolyte during the preparation of the electrolyte, and the additives will be partially or completely combined with the lithium ions in the electrolyte after addition, thereby forming the above lithium metal chelate. Therefore, at least one of a lithium metal chelate and an additive capable of being combined with lithium ions to form a chelate is included in the electrolyte of the secondary battery.

In some of these embodiments, the additive capable of being combined with lithium ions to form a chelate includes one or more of an organophosphonic acid, a phosphonate, and an oxalate. Correspondingly, the lithium metal chelate compound includes one or more of a chelate compound formed from the lithium ion and the organophosphonic acid, a chelate compound formed from the lithium ion and the phosphonate, and a chelate compound formed from the lithium ion and the oxalate.

Among the additives having a chelating effect with lithium ions, those having a phosphorus-oxygen double bond (P = O) or a carbon-oxygen double bond (C = O) can form an electron pair, locally exhibit electronegativity, and form a ligand. Since the lithium ions are positively charged and possess vacant orbitals in their outermost shell, the lithium ions with vacant orbitals can form a chelate by coordinating with ligands containing electron pairs through coordinate bonds. The lithium ions form a chelation phase with the above chelating additive, so that the chalcogen dissolved in the electrolyte is more difficult to combine with the lithium ions, thereby alleviating the chalcogen dissolved in the electrolyte from migrating to the negative electrode and being combined with the lithium ions in the electrolyte to form insoluble Li₂S.

It can be understood that the additive capable of being combined with lithium ions to form a chelate compound may be an organophosphonic acid, a phosphonate or an oxalate alone, or may be a mixture of any two or more of the organophosphonic acid, the phosphonate and the oxalate.

In some of these embodiments, the organophosphonic acid includes one or more of hydroxyethylidene diphosphonic acid, aminotri(methylene phosphonic acid), ethylenediamine tetramethylene phosphonic acid, and ethylenediamine tetra(methylene phosphonic acid); the phosphonate includes one or more of diethyl hydroxyethylidene diphosphonate, dimethyl hydroxyethylidene diphosphonate, and dipropyl hydroxyethylidene diphosphonate; and the oxalate includes one or more of dimethyl oxalate, diethyl oxalate, dipropyl oxalate, and dibutyl oxalate. It is understood that the organophosphonic acids, phosphonates, and oxalates capable of being combined with lithium ions to form a chelate as an additive may include, but are not limited to, the specific types mentioned above.

In some of these embodiments, the chalcogen includes one or more of sulfur, selenium and tellurium. In some particular embodiments, the chalcogen is sulfur. It can be understood that the chalcogen in the positive electrode film layer may be any one of sulfur, selenium and tellurium, or may be a combination of two or more of the above elements.

In some of these embodiments, a mass of Li ₂ MO ₄ in the positive electrode electrolyte interface film is 0.1% - 4.5% of a mass of the positive electrode active material. The thickness of the CEI layer attached to the surface of the positive electrode active material is from 5 nm to 20 nm, and optionally 5 nm to 10 nm. It can be understood that the content of the Li₂MO₄ in the CEI layer mainly depends on the content of the residual lithium compounds on the surface of the positive electrode active material and the amount of chalcogen added in the positive electrode film layer. Similarly, the thickness of the CEI layer attached to the surface of the positive electrode active material also mainly depends on the content of the residual lithium compounds on the surface of the positive electrode active material and the amount of chalcogen added in the positive electrode film layer.

It should be noted that most of the artificial Li₂MO₄ CEI layer in the positive electrode film layer will be attached to the surface of the positive electrode active material, and some of the CEI layers may exist alone in the positive electrode film layer.

In some of these embodiments, the positive electrode active material includes LiₓNiₐCo_{b}A_{c}O₂, where A is Mn or Al, 0.2≤x≤1.2, 0.6≤a<1, 0<b≤0.2, and a+b+c =1. That is, the positive electrode active material is used as a high-nickel ternary positive electrode material. As such, the secondary battery can achieve a high energy density.

A second aspect of the present application provides a preparation method of the secondary battery of the first aspect of the present application, the preparation method including the steps of:
a solvent, a positive electrode active material, and an elemental chalcogen are mixed to form a slurry, the slurry is coated onto a positive electrode current collector, and it is dried to obtain a positive electrode sheet; and
the negative electrode sheet and the positive electrode sheet are assembled into a dry cell, and the electrolyte is injected into the dry cell to obtain a secondary battery;
where composition raw materials of the electrolyte include a solvent, a lithium salt and an additive capable of being combined with lithium ions to form a chelate.

According to the preparation method of the present application, elemental chalcogens are added into the positive electrode film layer. These elemental chalcogens possess strong reducibility and can react with the surface of the positive electrode active material to produce Li₂M₂O₃, while simultaneously reducing some transition metal ions on the surface of the positive electrode active material to rock-salt phase DO through "solid solution" reduction, where D represents one or more transition metal elements selected from Ni, Co, Mn, etc. Taking elemental sulfur as an example, the formula for the reaction of the elemental chalcogen with the surface of the positive electrode active material is as shown in the following formula (1):

4LiDO₂+2S → 4DO+Li₂S₂O₃+Li₂O (1)

The resulting rock-salt phase DO can serve as a barrier to mitigate side reactions between the internal positive electrode active material and the electrolyte solvent. Moreover, during the initial charging process (i.e., the formation stage), Li₂S₂O₃ can be electrochemically oxidized to Li₂SO₄, forming an electrochemically stable artificial CEI (positive electrode electrolyte interface film) layer of Li₂SO₄. Simultaneously, residual lithium compounds such as Li₂O and Li₂CO₃ on the surface of the positive electrode active material are removed, and the generated CO₂ can be released together with other gases formed during the formation process of the lithium ion secondary battery. The formulas for the reaction of Li₂S₂O₃ with the residual lithium compounds on the surface of the positive electrode active material are as shown in the following formulas (2) to (5):

Li₂S₂O₃+5Li₂O-8e⁻ → 2Li₂SO₄+8Li⁺ (2)

Li₂S₂O₃+Li₂CO₃-8e⁻ → 2 Li₂SO₄+5CO₂+8Li⁺ (3)

2LiDO₂+S+2Li₂O-4e⁻ → 2DO+ Li₂SO₄+4Li⁺ (4)

2LiDO₂+S+2Li₂CO₃-4e⁻→2DO+Li₂SO₄+2CO₂+4Li⁺ (5)

Therefore, the elemental chalcogen in the positive electrode film layer can reduce the positive electrode active material LiDO₂ on the one hand, form a DO protective layer on the surface of the positive electrode active material, and can remove residual lithium compounds such as Li₂O and Li₂CO₃ on the surface of the positive electrode active material by adding an elemental chalcogen to the positive electrode slurry, while forming an electrochemically stable artificial Li₂MO₄ CEI layer, which can improve the initial Coulombic efficiency and storage performance of the secondary battery, particularly for those employing high-nickel ternary positive electrode materials, while reducing the battery's DCR and enhancing its rate performance and cycle performance.

However, the elemental chalcogen added in the positive electrode film layer may be partially dissolved in the electrolyte to form ions, which on one hand, may cause that the residual lithium compounds on the surface of the positive electrode active material cannot be completely removed, and on the other hand, the chalcogen ions dissolved in the electrolyte may migrate to the negative electrode of the battery to form non-conductive chalcogen lithium compounds, such as Li₂S. It will reduce the conductivity of the battery's negative electrode surface, thereby deteriorating the kinetic performance of the negative electrode, increasing the battery's DCR, and ultimately leading to degradation of the battery's rate performance.

In this regard, in the present application, an additive capable of being combined with lithium ions to forming chelates is added into the electrolyte. This additive can form a chelation phase with lithium ions in the electrolyte, making it more difficult for the elemental chalcogens dissolved in the electrolyte to combine with lithium ions, thereby inhibiting the migration of free chalcogens in the electrolyte toward the negative electrode of the battery, and inhibiting the dissolution of elemental chalcogen in the electrolyte, so that the elemental chalcogen tends to play a role in removing the residual lithium compounds from the surface of the positive electrode active material at the positive electrode of the battery. Consequently, the efficiency of removing the residual lithium compounds from the surface of the positive electrode active material is improved, and the degradation of the kinetic performance and the cycle performance of the battery caused by the combination of chalcogen ions and lithium ions in the electrolyte can be mitigated, thereby further reducing the battery's DCR and further improving the rate performance and the cycle performance of the battery.

Specifically, the lithium ions in the electrolyte are mainly solvated lithium ions, and the lithium ions will undergo a solvation reaction with the electrolyte after being extracted from the positive electrode, and are inserted into the negative electrode active material after undergoing a desolvation reaction on the SEI film of the negative electrode. When no additive capable of being combined with lithium ions to form a chelate is added to the electrolyte, a small part of lithium ions that are desolvated and not intercalated into the negative electrode active material will react with free chalcogen ions on the surface of the negative electrode SEI film to form insoluble chalcogen lithium, thereby affecting the performance of the battery. When an additive capable of being combined with lithium ions to form a chelate is added to the electrolyte, a small part of lithium ions that are desolvated and not intercalated into the negative electrode active material will be chelated and fixed by the chelating additive, and will not react with the chalcogen ions free on the surface of the negative electrode SEI film, thereby improving the rate performance and dynamics of the battery.

In some of these embodiments, the elemental chalcogen includes one or more of elemental sulfur, elemental selenium and elemental tellurium. In some particular embodiments, the elemental chalcogen is used as an elemental sulfur. It can be understood that the elemental chalcogen in the positive electrode film layer may be any one of elemental sulfur, elemental selenium and elemental tellurium, or may be a combination of two or more of the above elements.

In some of these embodiments, a mass of the elemental chalcogen in the slurry of the positive electrode is 0.01% - 5% of a mass of the positive electrode active material. The amount of the elemental chalcogen in the positive electrode slurry is within the above range, which can not only better remove the residual lithium compounds from the surface of the positive electrode active material, but also alleviate the adverse effect of excessive chalcogen dissolved in the electrolyte on the performance of the secondary battery.

It can be understood that the mass of the elemental chalcogen may be, but is not limited to, 0.01%, 0.02%, 0.05%, 0.08%, 0.1%, 0.15%, 0.3%, 0.5%, 0.8%, 1%, 1.2%, 1.5%, 1.8%, 2%, 2.2%, 2.5%, 2.8%, 3%, 3.2%, 3.5%, 3.8%, 4%, 4.2%, 4.5%, 4.8%, or 5% of a mass of the positive electrode active material.

In some of these embodiments, a mass of the elemental chalcogen in the slurry of the positive electrode is 0.35% - 1% of a mass of the positive electrode active material. As such, the adverse effect of the chalcogen dissolved in the electrolyte on the performance of the secondary battery can be further alleviated while the residual lithium compounds on the surface of the positive electrode active material are effectively removed.

In some of these embodiments, based on the total mass of the electrolyte, the mass fraction of the additive capable of being combined with lithium ions to form a chelate is 0.01% - 3%. In view of making the chelating additive have a better Li chelating effect without affecting the performance of the battery cell, the amount of the additive is preferably limited to the above range. It can be understood that the mass fraction of the additive capable of being combined with lithium ions to form a chelate in the electrolyte may be, but is not limited to, 0.01%, 0.05%, 0.1%, 0.15%, 0.2%, 0.25%, 0.3%, 0.35%, 0.4%, 0.5%, 0.8%, 1%, 1.2%, 1.5%, 1.6%, 1.8%, 2%, 2.2%, 2.5%, 2.8%, or 3%.

In some of these embodiments, based on the total mass of the electrolyte, the mass fraction of the additive capable of being combined with lithium ions to form a chelate is 0.05% - 0.1%. As such, the cycle performance and rate performance of the secondary battery can be further improved, and the DCR (direct current resistance) of the battery can be reduced.

In some of these embodiments, the positive electrode active material is used as a high-nickel ternary positive electrode material, including LiₓNiₐCo_{b}A_{c}O₂, where A is Mn or Al, 0.2≤x≤1.2, 0.6≤a<1, 0<b≤0.2, and a+b+c =1. As such, the secondary battery can achieve a high energy density.

In some of these embodiments, the mass fraction of the residual lithium compounds on the surface of the positive electrode active material constituting the slurry is from 0.1% to 2.0%. In other words, the positive electrode active material used to prepare the positive electrode slurry has a mass fraction of 0.1% to 2.0% of surface residual lithium.

In some of these embodiments, the solvent in the electrolyte may be selected from one or more of dimethyl carbonate, diethyl carbonate, dipropyl carbonate, methyl ethyl carbonate, methyl propyl carbonate, ethyl propyl carbonate, ethylene carbonate, propylene carbonate, butylene carbonate, gamma-butyrolactone, methyl formate, ethyl acetate, propyl acetate, methyl propionate, ethyl propionate, and tetrahydrofuran.

In some of these embodiments, the lithium salt in the electrolyte may be one or more of lithium hexafluorophosphate, lithium bis(trifluoromethanesulfonyl)imide, lithium bis(fluorosulfonyl)imide, lithium bis(oxalato)borate, lithium difluoro(oxalato)borate, lithium tetrafluoroborate, lithium perchlorate, lithium hexafluoroarsenate, and lithium trifluoromethanesulfonate. The concentration of the lithium salt in the electrolyte may be 0.5 mol/L to 1.5 mol/L, and preferably 0.8 mol/L to 1.2 mol/L.

Further provided in a third aspect of the present application is an electric device including one or more of the secondary batteries of the first aspect of the present application and the secondary battery prepared by the preparation method of the second aspect of the present application.

The following appropriately describes the secondary battery and the electric device in this application with reference to the accompanying drawings.

Unless specifically stated, components and types or contents of materials of the battery are applicable to both a lithium ion secondary battery and a sodium ion secondary battery.

In an embodiment of the present application, a secondary battery is provided.

Generally, the secondary battery includes a positive electrode sheet, a negative electrode sheet, an electrolyte, and a separator. During charge and discharge of the battery, active ions are intercalated and deintercalated back and forth between the positive electrode sheet and the negative electrode sheet. The electrolyte functions to conduct ions between the positive electrode sheet and the negative electrode sheet. The separator is disposed between the positive electrode sheet and the negative electrode sheet, to mainly prevent positive and negative electrodes from being shortcircuited and allow ions to pass through.

### Positive electrode sheet

The positive electrode sheet includes a positive electrode current collector and a positive electrode film layer disposed on at least one surface of the positive electrode current collector.

As a non-limiting example, the positive electrode current collector has two surfaces opposed in its own thickness direction, and the positive electrode film layer is provided on either one or both of the two opposed surfaces of the positive electrode current collector.

In some implementations, the positive electrode current collector may be a metal foil or a composite current collector. For example, an aluminum foil can be used as the metal foil. The composite current collector may include a polymer material base layer and a metal layer formed on at least one surface of the polymer material base layer. The composite current collector may be obtained by forming a metal material on a polymer material substrate. In the positive electrode current collector, a non-limiting example of the metal material may include one or more of aluminum, an aluminum alloy, nickel, a nickel alloy, titanium, a titanium alloy, silver, a silver alloy, or the like. In the positive electrode current collector, a non-limiting example of the polymer material substrate may include one or more of substrates such as polypropylene (PP), polyethylene terephthalate (PET), polybutylene terephthalate (PBT), polystyrene (PS), and polyethylene (PE).

In some implementations, a positive electrode active material may include a positive electrode active material for a battery well-known in the art.

As a non-limiting example, a positive electrode active material of a lithium ion secondary battery may include one or more of the following materials: olivine-structured lithium-containing phosphate, a lithium transition metal oxide, and their respective modified compounds. However, the present application is not limited to these materials, and other conventional materials that can be used as a positive electrode active material of a battery may also be used. These positive electrode active materials may be used alone or in combination of two or more thereof. Examples of the lithium transition metal oxide may include, but are not limited to, one or more of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, and their respective modified compounds thereof. Non-limiting examples of the olivine-structured lithium-containing phosphate may include, but are not limited to, one or more of lithium iron phosphate, a composite material of lithium iron phosphate and carbon, lithium manganese phosphate, a composite material of lithium manganese phosphate and carbon, lithium ferric manganese phosphate, a composite material of lithium ferric manganese phosphate and carbon, and their respective modified compounds. A non-limiting example of the lithium cobalt oxide may include LiCoO₂; a non-limiting example of the lithium nickel oxide may include LiNiO₂; a non-limiting example of the lithium manganese oxide may include LiMnO₂, LiMn₂O₄, or the like; a non-limiting example of the lithium nickel cobalt manganese oxide may include LiNi_{1/3}Co_{1/3}Mn_{1/3}O₂ (or may be referred to as NCM₃₃₃ for short), LiNi_{0.5}Co_{0.2}Mn_{0.3}O₂ (or may be referred to as NCM₅₂₃ for short), LiNi_{0.5}Co_{0.25}Mn_{0.25}O₂ (or may be referred to as NCM₂₁₁ for short), LiNi_{0.6}Co_{0.2}Mn_{0.2}O₂ (or may be referred to as NCM₆₂₂ for short), LiNi_{0.8}Co_{0.1}Mn_{0.1}O₂ (or may be referred to as NCM₈₁₁ for short), or the like; and a non-limiting example of a lithium nickel cobalt aluminum oxide may include LiNi_{0.85}Co_{0.1}Al_{0.05}O₂.

It may be understood that deintercalation and consumption of lithium (Li) occur during charge and discharge of the battery, and the content of Li in the positive electrode sheet varies when the battery is discharged to different states. In the enumeration of positive electrode materials in the present application, unless otherwise specified, the content of Li is in an initial state of the material. When the positive electrode material is applied to a positive electrode sheet in a battery system, the content of Li in the positive electrode material contained in the electrode sheet usually changes after a charge and discharge cycles. The content of Li may be measured by using a molar content, but is not limited thereto. For "the content of Li is in an initial state of the material", the initial state of the material means a state before the material is added to a positive electrode slurry. It may be understood that a new material obtained by performing appropriate modification on the enumerated positive electrode material is also within the scope of the positive electrode material, the foregoing appropriate modification refers to an acceptable modification manner for the positive electrode material, such as coating modification, and a non-limiting example of the acceptable modification manner is, for example, coating modification.

In the enumeration of the positive electrode material in the present application, the content of oxygen (O) is only a theoretical state value, the molar content of oxygen changes due to the release of oxygen from a lattice, and the actual molar content of O fluctuates. The content of O may be measured by using a molar content, but is not limited thereto.

As a non-limiting example, a positive electrode active material of a sodium ion secondary battery may include one or more of the following materials: a sodium transition metal oxide, a polyanionic compound, and a Prussian blue compound. However, the present application is not limited to these materials, and other conventional well-known materials that can be used as a positive electrode active material of a sodium ion battery may also be used.

As an optional technical solution of the present application, in the sodium transition metal oxide, a transition metal may be one or more of Mn, Fe, Ni, Co, Cr, Cu, Ti, Zn, V, Zr, and Ce. The sodium transition metal oxide is, for example, NaₓMO₂, where M is one or more of Ti, V, Mn, Co, Ni, Fe, Cr, and Cu, and 0<x≤1.

As an optional technical solution of the present application, the polyanionic compound may be a compound having a sodium ion, a transition metal ion, and a tetrahedral (YO₄)ⁿ⁻ anion unit. The transition metal may be one or more of Mn, Fe, Ni, Co, Cr, Cu, Ti, Zn, V, Zr, and Ce; Y may be one or more of P, S, and Si; and n represents a valence state of (YO₄)ⁿ⁻.

The polyanionic compound may alternatively be a compound having a sodium ion, a transition metal ion, a tetrahedral (YO₄)ⁿ⁻ anion unit, and a halogen anion. The transition metal may be one or more of Mn, Fe, Ni, Co, Cr, Cu, Ti, Zn, V, Zr, and Ce; Y may be one or more of P, S, and Si, and n represents a valence value of (YO₄)ⁿ⁻; and the halogen may be one or more of F, Cl, and Br.

The polyanionic compound may alternatively be a compound having a sodium ion, a tetrahedral (YO₄)ⁿ⁻ anion unit, a polyhedral unit (ZO_{y})^{m+}, and an optional halogen anion. Y may be one or more of P, S, and Si, and n represents a valence value of (YO₄)ⁿ⁻; Z represents a transition metal, and may be one or more of Mn, Fe, Ni, Co, Cr, Cu, Ti, Zn, V, Zr, and Ce, and m represents a valence value of (ZO_{y})^{m+}; and the halogen may be one or more of F, Cl, and Br.

The polyanionic compound is, for example, one or more of NaFePO₄, Na₃V₂(PO₄)₃(sodium vanadium phosphate, NVP for short), Na₄Fe₃(PO₄)₂(P₂O₇), NaM'PO₄F (M' is one or more of V, Fe, Mn, and Ni), and Na₃(VO_{y})₂(PO₄)₂F_{3-2y} (0≤y≤1).

The Prussian blue compound may be a compound having a sodium ion, a transition metal ion, and a cyanide ion (CN⁻). The transition metal may be one or more of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently one or more of Ni, Cu, Fe, Mn, Co, and Zn, 0<a≤2, 0<b<1, and 0<c<1.

A weight ratio of the positive electrode active material in the positive electrode film layer is 80-100 wt% based on the total weight of the positive electrode film layer.

In some embodiments, the positive electrode film layer optionally further includes a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. A weight ratio of the binder in the positive electrode film layer is 0-20 wt% based on the total weight of the positive electrode film layer.

In some embodiments, the positive electrode film layer further optionally includes a conductive agent. As a non-limiting example, the conductive agent may include one or more of superconducting carbon, acetylene black, carbon black, ketjen black, carbon dots, carbon nanotubes, graphene, and carbon nanofibers. A weight ratio of the conductive agent in the positive electrode film layer is 0-20 wt% based on the total weight of the positive electrode film layer.

### Negative electrode sheet

The negative electrode sheet includes a negative electrode current collector and a negative electrode film layer disposed on at least one surface of the negative electrode current collector, the negative electrode film layer including a negative electrode active material.

As a non-limiting example, the negative electrode current collector has two surfaces opposite in its own thickness direction, and the negative electrode film layer is disposed on either one or both of the two opposite surfaces of the negative electrode current collector.

In some of these embodiments, the negative electrode current collector may employ a metal foil or composite current collector. For example, a copper foil may be used as the metal foil. The composite current collector may include a polymer material base layer and a metal layer formed on at least one surface of a polymer material substrate. The composite current collector may be obtained by forming a metal material on a polymer material substrate. In the negative electrode current, a non-limiting example of the metal material may include one or more of copper, a copper alloy, nickel, a nickel alloy, titanium, a titanium alloy, silver, a silver alloy, or the like. In the negative electrode current collector, a non-limiting example of the polymer material substrate may include one or more of substrates such as polypropylene (PP), polyethylene terephthalate (PET), polybutylene terephthalate (PBT), polystyrene (PS), and polyethylene (PE).

In some of these embodiments, the negative electrode active material may be a negative electrode active material well-known in the art for batteries.

As a non-limiting example, the negative electrode active material of the lithium ion secondary battery may include one or more of the following materials: synthetic graphite, natural graphite, soft carbon, hard carbon, a silicon-based material, a tin-based material, lithium titanate, and the like. The silicon-based material may include one or more of elemental silicon, a silicon-oxygen compound, a silicon-carbon composite, a silicon-nitrogen composite, and a silicon alloy. The tin-based material may include one or more of elemental tin, a tin-oxygen compound, and a tin alloy. However, this application is not limited to these materials, and another conventional material that can be used as a negative electrode active material of a battery may also be used. These negative electrode active materials may be used alone or in combination of two or more thereof.

As a non-limiting example, the negative active material of the sodium-ion secondary battery is usually a hard carbon material, a two-dimensional metal carbide or nitride. The negative electrode active material of the preferred sodium ion secondary battery is generally a hard carbon material.

In some embodiments, the negative electrode film layer optionally further includes a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethylchitosan (CMCS).

In some embodiments, the negative electrode film layer further optionally includes a conductive agent. The conductive agent may include at least one or more of superconducting carbon, acetylene black, carbon black, ketjen black, carbon dots, carbon nanotubes, graphene, and carbon nanofibers.

In some embodiments, the negative electrode film layer further optionally includes another auxiliary agent, for example, a thickening agent (e.g., sodium carboxymethyl cellulose (CMC-Na)).

In some embodiments, the negative electrode sheet may be prepared in the following manner: dispersing the above-mentioned components for preparing the negative electrode sheet, for example, the negative electrode active material, the conductive agent, the binder, and any other component in a solvent (non-limiting example of a solvent, such as deionized water) to form a negative electrode slurry; and coating the negative electrode slurry on at least one side surface of the negative electrode current collector, and performing procedures such as drying and cold pressing, to obtain the negative electrode sheet. The surface of the negative electrode current collector to which the negative electrode slurry is applied may be a single surface of the negative electrode current collector or both surfaces of the negative electrode current collector. The solid content of the negative electrode slurry may be 40 wt% to 60 wt%. The viscosity of the negative electrode slurry at room temperature may be adjusted to 2000 mPa·s to 10000 mPa·s. When coating the negative electrode slurry, the coating areal density on a dry weight basis (excluding solvent) may range from 75 to 220 g/m². The compacted density of the negative electrode sheet is in a range of from 1.0 g/cm³ to 1.8 g/cm³.

### Electrolyte

The electrolyte functions to conduct ions between the positive electrode sheet and the negative electrode sheet. The type of the electrolyte is not particularly limited in the present application, and may be selected according to a requirement. For example, the electrolyte may be liquid, gelled or all solid.

In some implementations, the electrolyte uses an electrolyte solution. The electrolyte solution includes an electrolyte salt and a solvent.

In some embodiments, an electrolyte salt of a lithium ion secondary battery may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis-trifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluorodioxalate phosphate (LiDFOP), and lithium tetrafluorooxalate phosphate (LiTFOP).

In some embodiments, the solvent may include one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), and ethyl sulfonyl ethane (ESE).

In some implementations, the electrolyte optionally further includes an additive. For example, the additive may include a negative electrode film-forming additive or a positive electrode film-forming additive, and may further include an additive capable of improving specific performance of a battery, for example, an additive for improving overcharge performance of a battery, or an additive for improving high-temperature or low-temperature performance of a battery.

### Separator

In some embodiments, the secondary battery further includes a separator. The type of the separator is not particularly limited in the present application, and any well-known porous separator with good chemical stability and mechanical stability may be used.

In some embodiments, a material of the separator may include one or more of glass fiber, non-woven fabric, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some embodiments, the thickness of the separator is 6 µm to 40 µm, optionally 12 µm to 20 µm.

In some embodiments, the positive electrode sheet, the negative electrode sheet, and the separator may be manufactured into the electrode assembly through a winding process or a lamination process.

In some embodiments, the secondary battery may include an outer package. The outer package may be used to package the electrode assembly and the electrolyte.

In some implementations, the outer package of the secondary battery may be a hard case, such as a hard plastic case, an aluminum case, a steel case, or the like. The outer package of the secondary battery may also be a pouch, such as a bag-type pouch. A material of the pouch may be plastic, and further, non-limiting examples of the plastic may include one or more of polypropylene, polybutylene terephthalate, and polybutylene succinate.

The secondary battery includes at least one battery cell. The secondary battery may include 1 or a plurality of battery cells.

In the present application, unless otherwise specified, a "secondary battery" refers to a basic unit capable of implementing mutual conversion of chemical energy and electrical energy, and further, generally includes at least a positive electrode sheet, a negative electrode sheet, and an electrolyte. During charge and discharge of the battery, active ions are intercalated and deintercalated back and forth between the positive electrode sheet and the negative electrode sheet. The electrolyte functions to conduct active ions between the positive electrode sheet and the negative electrode sheet.

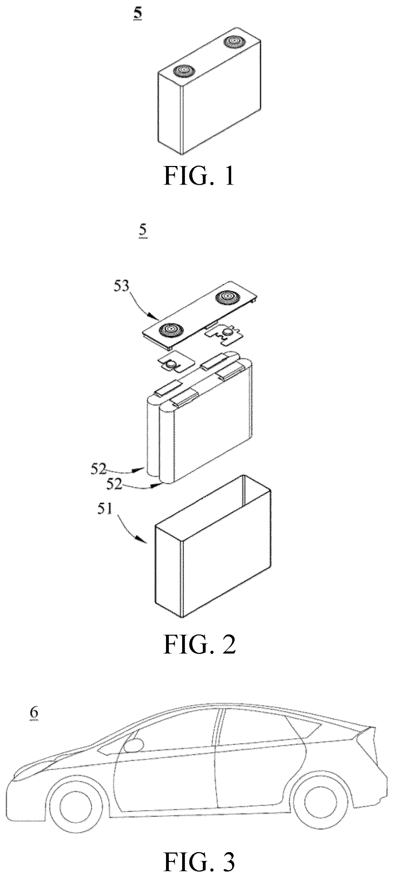

The shape of the secondary battery is not limited in this application, and may be a cylindrical shape, a square shape, or any other shape. For example, FIG. 1 shows a battery cell 5 with a square structure as an example.

In some embodiments, referring to FIG. 2, the outer package may include a housing 51 and a cover plate 53. The housing 51 may include a bottom plate and side plates connected to the bottom plate, and the bottom plate and the side plates may define an accommodating chamber. The housing 51 has an opening communicating with the accommodating chamber, and the cover plate 53 can cover the opening to close the accommodating chamber. The positive electrode sheet, the negative electrode sheet, and the separator may be formed into an electrode assembly 52 through a winding process or a lamination process. The electrode assembly 52 is packaged within the accommodating chamber. The electrolyte solution is impregnated into the electrode assembly 52. There may be one or a plurality of electrode assemblies 52 included in the battery cell 5, and those skilled in the art may perform selection according to specific actual requirements.

In some implementations, the battery cell 5 may be assembled into a battery module, there may be one or a plurality of battery cells 5 included in the battery module, and those skilled in the art may select a specific quantity based on the application and capacity of the battery module.

In the battery module, a plurality of battery cells 5 may be arranged sequentially in a length direction of the battery module. Certainly, the secondary batteries may alternatively be arranged in any other manner. Further, the plurality of battery cells 5 may be fastened by using fasteners.

Optionally, the battery module may further include a case having an accommodating space in which the plurality of battery cells 5 are accommodated.

In some embodiments, the battery modules may be further assembled into a battery pack, and there may be one or a plurality of battery modules included in the battery pack, and the specific number may be selected by those skilled in the art according to the application and capacity of the battery pack.

A battery case and a plurality of battery modules disposed in the battery case may be included in the battery pack. The battery case includes an upper case and a lower case, the upper case being capable of covering the lower case and forming a closed space for accommodating the battery modules. The plurality of battery modules may be arranged in the battery case in any manner.

In addition, the present application further provides an electric device including at least one of a secondary battery, a battery module, or a battery pack provided by the present application. The secondary battery, the battery module, or the battery pack may be used as a power source of the electric device and may also be used as an energy storage unit of the electric device. The electric device may include a mobile device (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like, but is not limited thereto.

The secondary battery, the battery module, or the battery pack may be selected according to use requirements of the electric device.

FIG. 3 shows an electric device 6 as an example. The electric device is a pure electric vehicle, a hybrid electric vehicle, a plug-in hybrid electric vehicle, or the like. In order to meet the demand for high power and high energy density of the secondary battery by the electric device, a battery pack or a battery module may be used.

In another example, the apparatus may be a cell phone, a tablet computer, a notebook computer, or the like. This electric device is generally required to be thin and lightweight, and may use a secondary battery as a power supply.

Some embodiments are described below.

In order to make the technical problems solved by the present application, the technical solutions, and the beneficial effects clearer, the present application will be further described in detail below with reference to the embodiments and the accompanying drawings. Apparently, the described embodiments are only a part of the embodiments of the present application, and not all of the embodiments. The following description of at least one exemplary embodiment is merely illustrative in nature and is in no way intended as any limitation on the present application and its applications. All other embodiments obtained by those of ordinary skill in the art based on the embodiments of the present application without making creative efforts shall fall within the protection scope of the present application.

In the examples, specific techniques or conditions are not indicated, and they are performed according to techniques or conditions described in documents in the art or according to the specification of the product. The reagents or instruments used without specifying the manufacturer(s) are conventional products that are commercially available.

### I. Embodiments

### Embodiment 1:

### (1) Preparation of a positive electrode sheet

(1) The elemental sulfur was dispersed in an organic solvent N-methylpyrrolidone (NMP), and the mixture was stirred at a speed of 400 r/s to 1000r/s for 0.5 h to fully dissolve the elemental sulfur, to prepare an elemental sulfur solution with a concentration of 1 mol/L;
(2) Ternary lithium as a positive electrode active material, acetylene black as a conductive agent and polyvinylidene fluoride (PVDF) as a binder were dissolved in the solvent N-methylpyrrolidone (NMP) according to a mass ratio of 97:1:1, and the mixture was stirred uniformly to obtain a positive electrode slurry, where the positive electrode active material was a nickel-rich layered oxide positive electrode material with a molecular formula of LiNi_{0.8}Co_{0.1}Mn_{0.1}O₂;
(3) The elemental sulfur solution prepared in step (1) was added to the positive electrode slurry prepared in step (2), and the mixture was uniformly mixed to obtain a positive electrode slurry with elemental sulfur, where the stirring speed was maintained at 400 r/s to 1000 r/s, and the stirring time was 0.5 h to 6 h;
(4) The positive electrode slurry prepared in step (3) was coated on a positive electrode current collector aluminum foil; and
(5) The coated current collector obtained in step (4) was placed in an oven and dried at 90 °C, and then subjected to cold pressing and slitting to obtain a positive electrode sheet. The mass of the elemental chalcogen in the positive electrode film layer was 0.35% of the mass of the nickel-rich layered oxide positive electrode material, the areal density of the positive electrode film layer was 0.290 g/1540.25 mm², and the thickness of the positive electrode film layer on one side of the current collector was 66 µm.

### (2) Preparation of a negative electrode sheet

The negative electrode active material graphite, the conductive agent acetylene black, the thickener sodium hydroxymethyl cellulose (CMC) and the binder styrene-butadiene rubber (SBR) were dissolved in a mass ratio of 96: 1: 2: 1 into deionized water as a solvent, mixed uniformly and prepared into a negative electrode slurry; the negative electrode slurry was uniformly coated on the negative electrode current collector copper foil one or more times and dried at 90°C, and subjected to cold pressing and slitting to obtain a negative electrode sheet. The areal density of the negative electrode film layer was 0.181g/1540.25 mm², and the thickness of the negative electrode film layer on one side of the current collector was 75 µm.

### (3) Separator

A polyethylene film of which the thickness is 12 µm was used as the separator.

### (4) Electrolyte

In an argon atmosphere glovebox (H₂O<0.1 ppm, O₂<0.1 ppm), organic solvents ethylene carbonate EC), ethyl methyl carbonate (EMC) and diethyl carbonate (DEC) were uniformly mixed in a volume ratio of 1:1:1, LiPF6 ₆ lithium salt was added and dissolved in the organic solvents to prepare 1 mol/L of LiPF₆ electrolyte, and 0.05% of hydroxyethylidene diphosphonic acid (chelating agent) relative to the weight of the electrolyte was added to 1 mol/L of LiPF6 ₆ electrolyte and the mixture was stirred uniformly to obtain an electrolyte.

### (5) Battery assembly

The positive electrode sheet, the separator, and the negative electrode sheet were stacked in order, where the separator was located between the positive and negative electrode sheets to play a separating role, and the positive electrode sheet, the separator, and the negative electrode sheet were wound, a tab was welded thereto, and they were enclosed in an aluminum case and baked at 105 °C to remove water, and then the electrolyte solution was injected and the aluminum case was sealed to obtain an uncharged secondary battery cell. The uncharged battery cell was further subjected to steps such as standing, hot and cold pressing, chemical forming, shaping, and capacity testing in order to obtain lithium ion secondary battery cells. After the battery cell was subjected to the formation process, a positive electrode electrolyte interface film containing Li₂MO₄ was formed in the positive electrode film layer.

### Embodiment 2:

The present embodiment is substantially the same as Embodiment 1, except that the contents of the hydroxyethylidene diphosphonic acid additives capable of forming a chelate with lithium ions in the electrolyte are different. The amount of hydroxyethylidene diphosphonic acid in the electrolyte of the secondary battery of the present embodiment was 0.01%.

### Embodiment 3:

The present embodiment is substantially the same as Embodiment 1, except that the contents of the hydroxyethylidene diphosphonic acid additives capable of forming a chelate with lithium ions in the electrolyte are different. The amount of hydroxyethylidene diphosphonic acid in the electrolyte of the secondary battery of the present embodiment was 0.1%.

### Embodiment 4:

The present embodiment is substantially the same as Embodiment 1, except that the contents of the hydroxyethylidene diphosphonic acid additives capable of forming a chelate with lithium ions in the electrolyte are different. The amount of hydroxyethylidene diphosphonic acid in the electrolyte of the secondary battery of the present embodiment was 3%.

### Embodiment 5:

The present embodiment is substantially the same as Embodiment 1, except that the contents of the hydroxyethylidene diphosphonic acid additives capable of forming a chelate with lithium ions in the electrolyte are different. The amount of hydroxyethylidene diphosphonic acid in the electrolyte of the secondary battery of the present embodiment was 5%.

### Embodiment 6:

The present embodiment is substantially the same as Embodiment 3, except that the types of the additives capable of forming a chelate with lithium ions in the electrolyte are different. In the electrolyte of the secondary battery of the present embodiment, dimethyl oxalate was used as the additive.

### Embodiment 7:

The present embodiment is substantially the same as Embodiment 3, except that the types of the additives capable of forming a chelate with lithium ions in the electrolyte are different. In the electrolyte of the secondary battery of the present embodiment, diethyl oxalate was used as the additive.

### Embodiment 8:

The present embodiment is substantially the same as Embodiment 3, except that the types of the additives capable of forming a chelate with lithium ions in the electrolyte are different. In the electrolyte of the secondary battery of the present embodiment, diethyl hydroxyethylidene diphosphonate was used as the additive.

### Embodiment 9:

The present embodiment is substantially the same as Embodiment 3, except that the content of the elemental chalcogen in the positive electrode film layer is different. In the present embodiment, a mass of the elemental chalcogen in the positive electrode film layer is 0.01% of a mass of the nickel-rich layered oxide positive electrode material.

### Embodiment 10:

The present embodiment is substantially the same as Embodiment 3, except that the content of the elemental chalcogen in the positive electrode film layer is different. In the present embodiment, a mass of the elemental chalcogen in the positive electrode film layer is 1.00% of a mass of the nickel-rich layered oxide positive electrode material.

### Embodiment 11:

The present embodiment is substantially the same as Embodiment 3, except that the content of the elemental chalcogen in the positive electrode film layer is different. In the present embodiment, a mass of the elemental chalcogen in the positive electrode film layer is 2.00% of a mass of the nickel-rich layered oxide positive electrode material.

### Embodiment 12:

The present embodiment is substantially the same as Embodiment 3, except that the content of the elemental chalcogen in the positive electrode film layer is different. In the present embodiment, a mass of the elemental chalcogen in the positive electrode film layer is 4.00% of a mass of the nickel-rich layered oxide positive electrode material.

### Embodiment 13:

The present embodiment is substantially the same as Embodiment 3, except that the content of the elemental chalcogen in the positive electrode film layer is different. In the present embodiment, a mass of the elemental chalcogen in the positive electrode film layer is 5.00% of a mass of the nickel-rich layered oxide positive electrode material.

### Embodiment 14:

The present embodiment is substantially the same as Embodiment 3, except that the type of the elemental chalcogen in the positive electrode film layer is different. In the present embodiment, the elemental chalcogen in the positive electrode film layer is elemental selenium.

### Embodiment 15:

The present embodiment is substantially the same as Embodiment 3, except that the type of the elemental chalcogen in the positive electrode film layer is different. In the present embodiment, the elemental chalcogen in the positive electrode film layer is elemental tellurium.

### II. Comparative Examples

### Comparative example 1:

This comparative example is substantially the same as Embodiment 1, except that no additive capable of being combined with lithium ions to form a chelate is added to the electrolyte.

### Comparative example 2:

This comparative example is substantially the same as Embodiment 1, except that no additive capable of being combined with lithium ions to form a chelate is added to the electrolyte, and no elemental chalcogen is added to the positive electrode film layer.

### III. Test Method

### (1) DCR Test at 25°C

At 25°C, the prepared secondary battery was charged with a constant current of 1/3 C to 4.25 V, and then charged at a constant voltage of 4.25 V to a current of 0.05 C, and after standing for 30 min, the voltage U1 was recorded, and then discharged at 1/3 C for 30 s, the voltage U2 was recorded, and then the internal resistance DCR of the secondary battery before storage was calculated based on the formula (U2-U1)/1/3C.

### (2) Rate performance test

At 25°C, the lithium ion secondary battery was first charged to 2.8 V with a constant current of 0.33 C, further charged to a current of 0.05 C at a constant voltage of 4.25 V, and the battery was left for 30 min, and then the lithium ion secondary battery was discharged to 2.8 V with a constant current of 0.3 C, and the discharge capacity of this time was recorded as Cap1, that is, the initial capacity at 0.33 C (mAh), and then the above step of charging at 0.33 C was repeated, and the battery was left for 30 min, and then the lithium ion battery was discharged to 4.25 V with a constant current of 0.5 C, and the discharge capacity of this time was recorded as Cap2. Capacity retention rate (%) at 0.5 C was M1=[Cap2/Cap1]×100%.

The above step of charging at 0.33 C was repeated again and the battery was let stand for 30 min, and then the lithium ion battery was discharged to 2.8 V with a constant current of 1 C, and the discharge capacity at this time was recorded as Cap3, and the capacity retention rate (%) at 1 C was M2=[Cap3/Cap1]×100%.

### (3) Test for cycle capacity retention rate at 0.33 C

At 25°C, the lithium ion secondary battery was first charged to 4.25 V with a constant current of 0.33 C, further charged to a current of 0.05 C at a constant voltage of 4.25 V, and let stand for 30 min, and then the lithium ion secondary battery was discharged to 2.8 V with a constant current of 0.33 C. This is one charge-discharge cycle. In this cycle, the discharge capacity is the discharge capacity at the first cycle and recorded as Cap4. The lithium ion secondary battery was repeated the above-mentioned charge-discharge cycle test, and the discharge capacity at the 100^{th} cycle was recorded as Cap5. The capacity retention rate (%) of the lithium ion secondary battery after 100 cycles was M3=[Cap5/Cap4]×100%. If the M3 value is larger, it indicates that the battery capacity loss is smaller and the cycle performance is better.

### (4) Test for cycle capacity retention rate at 1 C

At 25°C, the lithium ion battery was first charged to 4.25 V with a constant current of 1 C, further charged to a current of 0.05 C at a constant voltage of 4.25 V, and let stand for 30 min, and then the lithium ion battery was discharged to 2.8 V with a constant current of 1 C. This is one charge-discharge cycle. In this cycle, the discharge capacity is the discharge capacity at the first cycle and recorded as Cap6. The lithium ion battery was repeated the above-mentioned charge-discharge cycle test, and the discharge capacity at the 100^{th} cycle was recorded as Cap7. The capacity retention rate (%) of the lithium ion battery after 100 cycles was M4=[Cap7/Cap6]×100%. If the M4 value is larger, it indicates that the battery capacity loss is smaller and the cycle performance is better.

### (5) Initial Coulombic efficiency test

At 25°C, the electrolyte-injected lithium ion battery was subjected to the initial formation charging by charging it to 4.25 V with a constant current of 0.3 C, then further charging at a constant voltage of 4.25 V until the current reaches 0.05C, and the initial charging capacity as recorded as Cap8. Then, the lithium ion battery was discharged to 2.8 V with a constant current of 0.3 C, and the first discharge capacity was recorded as Cap9. The initial Coulombic efficiency (%) of the lithium ion battery is M5=[Cap9/Cap8]×100%. If the value of M5 is larger, it indicates that the battery has better reversibility and better kinetic performance.

### (6) Test for capacity retention rate after storage

At 25°C, the lithium ion battery was first charged to 4.25 V with a constant current of 0.3 C, further charged to a current of 0.05 C at a constant voltage of 4.25 V, and then the lithium ion battery was discharged to 2.8 V with a constant current of 0.3 C. This is one charge-discharge cycle. In this cycle, the discharge capacity is the discharge capacity before the first storage and recorded as Cap10. Then, the battery was charged to 4.25 V according to the above method and stored in a thermostatic chamber at 60°C for 60 days, after 60 days, the battery was taken out and cooled to 25°C, and a charge and discharge test was performed once according to the above method, the discharge capacity at this time was the discharge capacity after 60 days of storage and was recorded as Cap11. The capacity retention rate (%) of the lithium ion battery stored at 60°C for 60 days was M6=[Cap11/Cap10]×100%. If the M6 value is larger, it indicates that the battery capacity loss is smaller and the improvement effect is better.

Parameters and performance test results of the secondary battery in the above-mentioned embodiments and comparative examples of the present application are as shown in Tables 1 and 2. In Tables 1 and 2, "S" represents the examples, where S1 represents Embodiment 1, S2 represents Embodiment 2, and so forth; similarly, "D" represents the comparative examples, where D1 represents Comparative example 1, D2 represents Comparative example 2, and so on.

**Table 1**

| Item | Battery Parameter | | | | Battery Performance | | | | | | | |
|---|---|---|---|---|---|---|---|---|---|---|---|---|
| | Chalcogen | Chalcogen content (%) | Additive | Additive (%) | 25°CDCR (m Ω) | Capacity at 0.33C (mAh) | Capacity retention rate at 0.5C | Capacity retention rate at 1C (%) | Cycle capacity retention rate at 0.33C (%, 100 cycles) | Cycle capacity retention rate at 1C (%, 100 cycles) | Initial Coulombic Efficiency | Capacity retention rate after storage (%) |
| S1 | Sulfur | 0.35 | Hydroxyethylidene diphosphonic acid | 0.05 | 2.47 | 2446 | 97.71 | 94.51 | 96.62 | 90.38 | 88.68 | 97.82 |
| S2 | Sulfur | 0.35 | Hydroxyethylidene diphosphonic acid | 0.01 | 2.49 | 2444 | 97.68 | 94.37 | 96.51 | 90.31 | 88.6 | 97.8 |
| S3 | Sulfur | 0.35 | Hydroxyethylidene diphosphonic acid | 0.1 | 2.35 | 2460 | 98.6 | 95.886 | 97.86 | 91.81 | 88.94 | 98.25 |
| S4 | Sulfur | 0.35 | Hydroxyethylidene diphosphonic acid | 3 | 2.5 | 2441 | 97.66 | 94.22 | 96.33 | 90.26 | 88.51 | 97.77 |
| S5 | Sulfur | 0.35 | Hydroxyethylidene diphosphonic acid | 5 | 2.85 | 2422 | 96.88 | 93.33 | 95.36 | 89 | 87.82 | 96.83 |
| S6 | Sulfur | 0.35 | Dimethyl oxalate | 0.1 | 2.42 | 2455 | 98.1 | 95 | 97.21 | 91.23 | 88.8 | 97.92 |
| S7 | Sulfur | 0.35 | Diethyl oxalate | 0.1 | 2.37 | 2458 | 98.3 | 95.4 | 97.44 | 91.58 | 88.85 | 98.2 |
| S8 | Sulfur | 0.35 | Diethyl hydroxyethylidene diphosphonate | 0.1 | 2.44 | 2451 | 97.88 | 94.84 | 96.93 | 90.69 | 88.78 | 97.88 |

**Table 2**

| Item | Battery Parameter | | | | Battery Performance | | | | | | | |
|---|---|---|---|---|---|---|---|---|---|---|---|---|
| | Chalcogen | Chalcogen content (%) | Additive | Additive (%) | 25°CDCR (m Ω) | Capacity at 0.33C (mAh) | Capacity retention rate at 0.5C | Capacity retention rate at 1C (%) | Cycle capacity retention rate at 0.33C (%, 100 cycles) | Cycle capacity retention rate at 1C (%, 100 cycles) | Initial Coulombic Efficiency | Capacity retention rate after storage (%) |
| S9 | Sulfur | 0.01 | Hydroxyethylidene diphosphonic acid | 0.1 | 25.4 | 2440 | 97.58 | 94.08 | 96.24 | 90.11 | 88.39 | 97.65 |
| S10 | Sulfur | 1.00 | Hydroxyethylidene diphosphonic acid | 0.1 | 2.66 | 2438 | 97.47 | 93.94 | 96.13 | 89.92 | 88.35 | 97.51 |
| S11 | Sulfur | 2.00 | Hydroxyethylidene diphosphonic acid | 0.1 | 2.74 | 2434 | 97.25 | 93.57 | 95.68 | 89.77 | 88.02 | 97.28 |
| S12 | Sulfur | 4.00 | Hydroxyethylidene diphosphonic acid | 0.1 | 2.83 | 2428 | 96.98 | 93.42 | 95.45 | 89.14 | 87.94 | 96.95 |
| S13 | Sulfur | 5.00 | Hydroxyethylidene diphosphonic acid | 0.1 | 2.92 | 2417 | 96.82 | 93.29 | 95.27 | 88.84 | 87.7 | 96.6 |
| S14 | Selenium | 0.35 | Hydroxyethylidene diphosphonic acid | 0.1 | 2.36 | 2460 | 98.57 | 95.74 | 97.82 | 91.77 | 88.93 | 98.17 |
| S15 | Tellurium | 0.35 | Hydroxyethylidene diphosphonic acid | 0.1 | 2.37 | 2458 | 98.54 | 95.7 | 97.8 | 91.74 | 88.9 | 98.2 |
| D1 | Carbon | 0.35 | / | / | 3.43 | 2402 | 96 | 89.98 | 91.35 | 80.77 | 87.51 | 94.5 |
| D2 | / | / | / | / | 3.5 | 2391 | 95.62 | 89.23 | 90.72 | 80.22 | 87.2 | 93 |

It can be seen from the data in Tables 1 and 2 that:
in the embodiments of the present application, the elemental chalcogen is added into the positive electrode slurry, and the additive capable of being combined with lithium ions to form a chelate is added into the electrolyte, so that the formed secondary battery has a lower DCR, a better rate performance, a better cycle performance, a higher initial Coulombic efficiency and a better storage performance.

It can be seen from the comparison of Embodiments 1 to 5 that, the amount of the additive capable of being combined with lithium ions to form a chelate in the electrolyte is controlled within a range of from 0.05% to 3%, which can further improve the rate performance, cycle performance, initial Coulombic efficiency and storage performance of the secondary battery, and further reduce the DCR of the secondary battery. The rate performance, cycle performance, initial Coulombic efficiency and storage performance of the secondary battery can be further improved, and the DCR of the secondary battery can be further reduced by controlling the amount of the additive in the electrolyte within a range of from 0.05% to 0.1%.

It can be seen from the comparison of Embodiment 3 and Embodiments 9 to 13 that the addition of the elemental chalcogen in the positive electrode slurry in an amount of 0.35% to 1% of a mass of the positive electrode active material can further improve the rate performance, cycle performance, initial Coulombic efficiency and storage performance of the secondary battery, and further reduce the DCR of the secondary battery.

It can be seen from Comparative example 2 that, no additive capable of being combined with lithium ions to form a chelate is added to the electrolyte, and no elemental chalcogen is added to the positive electrode film layer, so that the DCR of the secondary battery is relatively high, and the rate performance, cycle performance, initial Coulombic efficiency and storage performance of the secondary battery are all poor.

It can be seen from Comparative example 1 that, only elemental chalcogen is added to the positive electrode slurry, and the additive capable of being combined with lithium ions to form a chelate is not added to the electrolyte, compared with the above embodiments, the DCR of the secondary battery in Comparative example 1 is higher, and the rate performance, cycle performance, initial Coulombic efficiency and storage performance of the secondary battery are all poor. However, since the elemental chalcogen is added to the positive electrode slurry in Comparative example 1, a positive electrode electrolyte interface film containing Li₂MO₄ could be formed, and the DCR of the secondary battery is lower than that in Comparative example 2, and the rate performance, cycle performance, initial Coulombic efficiency and storage performance are all better than those in Comparative example 2.

The above descriptions of the various embodiments tend to emphasize differences between the various embodiments. For same or similar parts thereof, refer to these embodiments. For brevity, details are not described herein again.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the embodiments without departing from the subject matter of the present application, and other embodiments constructed by combining some of the constituent elements in the embodiments are also included in the scope of the present application.

## Claims

1. A secondary battery, comprising a positive electrode sheet, a negative electrode sheet, and an electrolyte; wherein
the positive electrode sheet comprises a positive electrode film layer, the positive electrode film layer comprises a positive electrode active material and a positive electrode electrolyte interface film; and the positive electrode electrolyte interface film comprises Li₂MO₄, wherein M comprises chalcogens; and
the electrolyte comprises a solvent and a lithium salt, and further comprises at least one of a lithium metal chelate and an additive capable of being combined with lithium ions to form a chelate.

2. The secondary battery according to claim 1, wherein the additive comprises one or more of an organophosphonic acid, a phosphonate, and an oxalate.

3. The secondary battery according to claim 2, wherein the organophosphonic acid comprises one or more of hydroxyethylidene diphosphonic acid, aminotri(methylene phosphonic acid), ethylenediamine tetra(methylene phosphonic acid), and ethylenediamine tetramethylene phosphonic acid.

4. The secondary battery according to claim 2 or 3, wherein the phosphonate comprises one or more of diethyl hydroxyethylidene diphosphonate, dimethyl hydroxyethylidene diphosphonate, and dipropyl hydroxyethylidene diphosphonate.

5. The secondary battery according to any one of claims 2 to 4, wherein the oxalate comprises one or more of dimethyl oxalate, diethyl oxalate, dipropyl oxalate, and dibutyl oxalate.

6. The secondary battery according to any one of claims 1 to 5, wherein the lithium metal chelate compound comprises one or more of a chelate compound formed from the lithium ion and the organophosphonic acid, a chelate compound formed from the lithium ion and the phosphonate, and a chelate compound formed from the lithium ion and the oxalate.

7. The secondary battery according to any one of claims 1 to 6, wherein the chalcogen comprises one or more of sulfur, selenium and tellurium.

8. The secondary battery according to any one of claims 1 to 7, wherein a mass of Li₂MO₄ in the positive electrode electrolyte interface film is 0.1% to 4.5% of a mass of the positive electrode active material.

9. The secondary battery according to any one of claims 1 to 8, wherein a thickness of the positive electrode electrolyte interface film on the surface of the positive electrode active material is from 5 nm to 20 nm.

10. The secondary battery according to any one of claims 1 to 9, wherein a thickness of the positive electrode electrolyte interface film on the surface of the positive electrode active material is from 5 nm to 10 nm.

11. The secondary battery according to any one of claims 1 to 10, wherein the positive electrode active material comprises LiₓNiₐCo_{b}A_{c}O₂, wherein A comprises at least one of Mn and Al, 0.2≤x≤1.2, 0.6≤a<1, 0<b≤0.2, and a+b+c =1.

12. The secondary battery according to any one of claims 1 to 11, wherein the lithium salt comprises one or more of lithium hexafluorophosphate, lithium bis(trifluoromethanesulfonyl)imide, lithium bis(fluorosulfonyl)imide, lithium bis(oxalato)borate, lithium difluoro(oxalato)borate, lithium tetrafluoroborate, lithium perchlorate, lithium hexafluoroarsenate, and lithium trifluoromethanesulfonate.

13. The secondary battery according to any one of claims 1 to 12, wherein a concentration of the lithium salt in the electrolyte is from 0.5 mol/L to 1.5 mol/L.

14. The secondary battery according to any one of claims 1 to 13, wherein a concentration of the lithium salt in the electrolyte is from 0.8 mol/L to 1.2 mol/L.

15. The secondary battery according to any one of claims 1 to 14, wherein the solvent comprises one or more of dimethyl carbonate, diethyl carbonate, dipropyl carbonate, methyl ethyl carbonate, methyl propyl carbonate, ethyl propyl carbonate, ethylene carbonate, propylene carbonate, butylene carbonate, gamma-butyrolactone, methyl formate, ethyl acetate, propyl acetate, methyl propionate, ethyl propionate, and tetrahydrofuran.

16. A preparation method of the secondary battery according to any one of claims 1 to 15, comprising the steps of:
mixing a solvent, a positive electrode active material, and an elemental chalcogen to form a slurry, coating the slurry onto a positive electrode current collector, and drying to obtain a positive electrode sheet; and
assembling the negative electrode sheet and the positive electrode sheet into a dry cell, and injecting the electrolyte into the dry cell to obtain a secondary battery;
wherein composition raw materials of the electrolyte comprise a solvent, a lithium salt and an additive capable of being combined with lithium ions to form a chelate.

17. The preparation method of the secondary battery according to claim 16, wherein a mass of the elemental chalcogen in the slurry is 0.01% to 5% of a mass of the positive electrode active material.

18. The preparation method of the secondary battery according to claim 16 or 17, wherein the mass of the elemental chalcogen in the slurry is 0.35% to 1% of a mass of the positive electrode active material.

19. The preparation method of the secondary battery according to any one of claims 16 to 18, wherein based on a total mass of the electrolyte, a mass fraction of the additive is from 0.01% to 3%.

20. The preparation method of the secondary battery according to any one of claims 16 to 19, wherein based on a total mass of the electrolyte, a mass fraction of the additive is from 0.05% to 0.1%.

21. The preparation method of the secondary battery according to any one of claims 16 to 20, wherein the surface of the positive electrode active material has residual lithium compounds, and a mass of the residual lithium compounds is 0.1% to 2.0% of a mass of the positive electrode active material.

22. An electric device, comprising one or more of the secondary batteries according to any one of claims 1 to 15 and the secondary battery prepared by the preparation method according to any one of claims 16 to 21.
